# FASCICULE DE BREVET EUROPEEN

(11) **EP 4 139 207 B1**
(45) Date de publication et mention de la délivrance du brevet: **30.09.2026**
(21) Numéro de dépôt: 21726154.4
(22) Date de dépôt: 13.04.2021
(51) Int. Cl.: B64C 11/06

(54) **PIVOT D'AUBE À ORIENTATION RÉGLABLE ET À INTÉGRITÉ SAUVEGARDÉE POUR MOYEU DE SOUFFLANTE DE TURBOMACHINE**
SCHAUFELDREHVERBINDUNG MIT EINSTELLBARER AUSRICHTUNG UND GESCHÜTZTER INTEGRITÄT FÜR EINE TURBOMASCHINENGEBLÄSENABE
BLADE PIVOT WITH ADJUSTABLE ORIENTATION AND PROTECTED INTEGRITY FOR A TURBOMACHINE FAN HUB

(30) Priorité: 23.04.2020 FR 2004053
(43) Date de publication de la demande: 01.03.2023
(73) Titulaire: SAFRAN AIRCRAFT ENGINES, 75015 Paris (FR)
(72) Inventeur: LEVISSE, Paul, Ghislain, Albert, 77550 MOISSY-CRAMAYEL (FR); BELMONTE, Olivier, 77550 MOISSY-CRAMAYEL (FR); MILLIER, Vincent, François, Georges, 77550 MOISSY-CRAMAYEL (FR)
(74) Mandataire: Cabinet Beau de Loménie
(86) Numéro de dépôt international: PCT/FR2021/050648
(87) Numéro de publication internationale: WO 2021/214399

(56) Documents cités:
- EP-A2- 2 535 519
- EP-A2- 2 677 121
- US-A1- 2008 279 689
- US-A1- 2010 215 499
- US-A1- 2017 313 404

## Description

### Domaine Technique

La présente invention se rapporte au domaine général des turbomachines équipées d'au moins une soufflante carénée ou non carénée, et dont les aubes de soufflante (dans le cas d'une soufflante carénée) ou les pales d'hélice (dans le cas d'une soufflante non carénée) sont équipées d'un système de calage de pas variable et elle concerne plus particulièrement la commande de l'orientation des aubes de soufflante(s) de ces turbomachines.

Un domaine privilégié d'application de l'invention est celui des turboréacteurs comprenant une soufflante carénée à très fort taux de dilution (grand diamètre de soufflante) et à très faible rapport de pression.

### Technique antérieure

L'opérabilité d'un turboréacteur à très fort taux de dilution est assurée en introduisant une variabilité sur le module basse-pression du turboréacteur, cette variabilité étant activée selon les phases de vol pour restaurer une marge au pompage suffisante.

Il est connu d'assurer la variabilité par un système de changement de calage des aubes de la soufflante qui soit intégré au moyeu de la soufflante. Un tel système de changement de calage des aubes permet également d'assurer la fonction d'inversion de poussée qui n'est, avec ce type de turboréacteur, plus réalisée par la nacelle du moteur.

Par ailleurs, dans le module de soufflante d'un turboréacteur à très fort taux de dilution, la rétention radiale des aubes de soufflante est généralement assurée par la forme du pied de pale et de l'alvéole qui la reçoit, par un pivot et ses paliers à roulement pour reprendre l'ensemble des efforts auxquels l'aube est soumise, par le moyeu de la soufflante dans lequel s'intègre l'ensemble des pivots.

On pourra par exemple se référer à la publication FR 3,046,403 qui décrit un exemple d'une telle architecture de maintien des aubes de soufflante. Plus précisément, dans cette publication, la rétention radiale de chaque aube se compose d'un pivot comprenant une attache en forme de bulbe, de deux paliers à roulement à billes qui permettent de reprendre les efforts aérodynamiques, inertiels et centrifuges subis par l'aube et son pivot, d'un excentrique relié par des cannelures au pivot, et d'un moyeu intégrant l'ensemble des pivots.

Avec une telle architecture, la dimension du moyeu de la soufflante dépend directement de l'intégration du mécanisme de changement de pas des aubes mais également de la taille des paliers à roulement de chaque pivot.

En effet, dans la configuration décrite dans la publication FR 3,046,403, le palier à roulement intérieur reprend l'intégralité des efforts centrifuges vus par l'aube et son pivot. Pour minimiser les efforts transversaux à reprendre par ce palier, les paliers à roulement intérieur et extérieur sont radialement très espacés l'un de l'autre. Le palier à roulement intérieur est donc non seulement le palier le plus large mais il est également placé sur un rayon très bas du moyeu de sorte que l'espace tangentiel entre les paliers à roulement intérieurs de deux aubes adjacentes est très restreint. Le diamètre du moyeu de la soufflante s'en trouve par conséquent impacté.

Un autre exemple de l'art antérieur est divulgué par le document US2008/279689.

Or, pour optimiser le rendement de la soufflante d'un turboréacteur à très fort taux de dilution, on cherche à minimiser le diamètre du moyeu de la soufflante et/ou à intégrer un nombre d'aubes plus important à même taille de moyeu.

### Exposé de l'invention

La présente invention a donc pour but de proposer une architecture des pivots et de leurs paliers à roulement qui soit moins encombrante.

Un autre but de l'invention est également de proposer une architecture permettant d'assurer la rétention de l'aube en toutes conditions et notamment la rétention de ses roulements, même en cas de rupture de ceux-ci. En effet, le dimensionnement du système de rétention des débris (blindage avion ou carter de rétention sur le moteur) s'effectue sur l'ensemble du débris libéré et assurer la rétention des roulements permet de limiter le dimensionnement du blindage avion à la seule masse de l'aube.

Conformément à l'invention, ce but est atteint grâce à un pivot d'aube à orientation réglable pour moyeu de soufflante de turbomachine, selon la revendication 1.

L'invention est remarquable en ce qu'elle propose un palier à roulement à billes ayant quatre points de contact qui est positionné le plus éloigné possible radialement de l'axe moteur pour bénéficier d'un maximum de place et ainsi être dimensionné pour reprendre les efforts centrifuges vus par l'aube et son pivot.

De même, avec sa structure de protection contre la défaillance du palier à roulement à billes, elle assure la rétention de ces roulements reprenant les efforts centrifuges même en cas de rupture de ceux-ci (fonction fail safe). Ainsi, l'intégralité de l'aube, du pivot et des roulements ne peut pas être emportée en cas de rupture, comme cela est possible avec les pivots de l'art antérieur et cet ensemble éjecté n'est donc plus de nature à créer des débris à haute énergie fortement préjudiciables au moteur et donc plus généralement à la mission.

Le contact créé entre la bague extérieure du roulement à rouleau et la pièce anti-rupture prémunie le pivot d'aube de toute rupture du roulement à billes.

Quant aux efforts transversaux, moins importants que les efforts centrifuges, ils sont repris par un palier à roulement à aiguilles ou à rouleaux qui permettent un guidage précis et un gain en compacité.

De préférence, le manchon anti-rupture s'étend successivement en une partie cylindrique puis une partie conique évasée vers l'extérieur comportant l'extrémité terminale, la jonction entre ces deux parties formant un appui transversal pour la bague interne du palier à roulement de reprise des efforts transversaux.

Le pivot peut comprendre en outre un capteur de position disposé en vis- vis d'une extrémité terminale du manchon anti-rupture et destiné à détecter tout déplacement radial du plot, dû par exemple à une rupture du palier à roulement à billes de reprise des efforts centrifuges.

Avantageusement, l'anneau de calage monté entre la bague interne du palier à roulement à billes de reprise des efforts centrifuges et la bague interne du palier à roulement de reprise des efforts transversaux peut être un anneau fusible en centrifuge.

De préférence, le manchon anti-rupture est fretté sur le pivot.

Avantageusement, le serrage des bagues internes respectives du palier à roulement à billes de reprise des efforts centrifuges et du palier à roulement de reprise des efforts transversaux par le second écrou de serrage est effectué via le manchon anti-rupture et l'anneau de calage.

De préférence, la bague interne et la bague externe du palier à roulement à billes de reprise des efforts centrifuges sont réalisées en deux parties distinctes afin de faciliter le montage du pivot.

L'invention a également pour objet une soufflante de turbomachine, comprenant au moins une aube à orientation réglable dont le moyeu est assemblé sur un pivot tel que défini précédemment ainsi qu'une turbomachine comprenant une telle soufflante.

L'invention a encore pour objet un procédé de montage d'un pivot tel que défini précédemment, comprenant successivement : la descente du pivot dans un moyeu de soufflante ; le montage du palier à roulements à billes de reprise des efforts centrifuges à une première extrémité du plot ; le serrage du palier à roulement à billes de reprise des efforts centrifuges par vissage du premier écrou de serrage sur le filetage interne du moyeu ; le montage en appui transversal à l'intérieur du moyeu de l'anneau de retenu portant la bague lisse externe du palier à roulement de reprise des efforts transversaux ; le montage du manchon anti-rupture à une seconde extrémité du plot, le manchon anti-rupture portant les parties restantes du palier à roulements de reprise des efforts transversaux ainsi qu'un anneau de calage fusible ; et le serrage du palier à roulements de reprise des efforts transversaux par vissage du second écrou de serrage.

### Brève description des dessins

[Fig. 1] La figure 1 est une vue en coupe montrant un pivot d'aube à orientation réglable selon un mode de réalisation de l'invention.
[Fig. 2A-2F] Les figures 2A à 2F représentent un exemple de montage d'un pivot selon le mode de réalisation de la figure 1.
[Fig. 3] La figure 3 illustre la configuration du pivot selon l'invention en fonctionnement normal.
[Fig. 4] La figure 4 illustre la configuration du pivot selon l'invention en cas de défaillance.

### Description des modes de réalisation

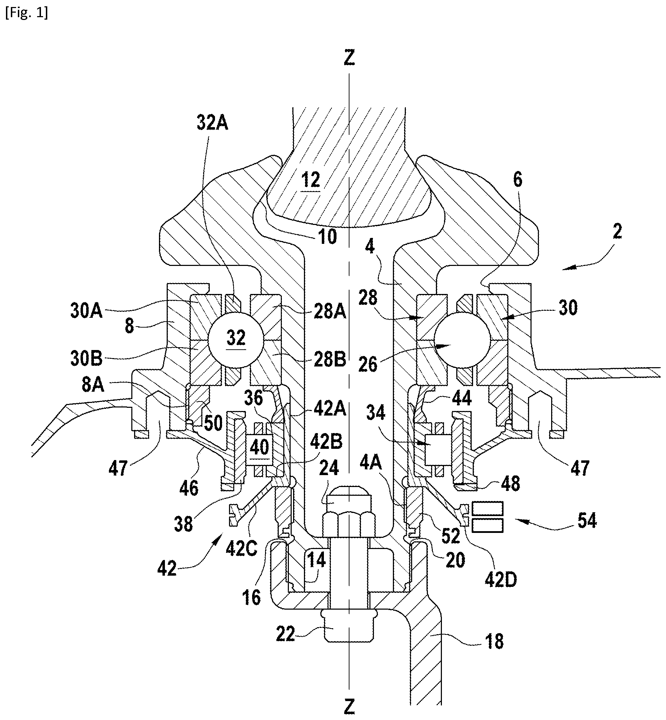

La figure 1 montre un pivot d'aube comprenant plusieurs éléments distincts qui sont assemblés entre eux de sorte à faciliter leur montage/démontage dans un moyeu rotatif d'aube de soufflante et ayant pour fonction d'assurer la rétention d'une aube de soufflante sur ce moyeu rotatif et le guidage de celle-ci pour le calage de son pas.

Comme il est connu, le pivot de chaque aube de soufflante est monté radialement dans un orifice du moyeu de la soufflante qu'il traverse de part en part, le moyeu étant centré sur l'axe longitudinal du turboréacteur dont l'architecture également bien connue de l'homme du métier et ne sera pas décrite ici en détails.

Selon l'invention, le pivot 2 comprend un plot 4 qui s'étend selon l'axe radial Z-Z du pivot au travers d'un orifice 6 du moyeu 8 de la soufflante. Ce plot 4 présente, à une extrémité radiale extérieure (c'est-à-dire au niveau de son extrémité la plus éloignée de l'axe longitudinal du turboréacteur), une attache 10 par exemple en forme de bulbe qui est destinée à recevoir un pied 12 de l'aube de soufflante. Bien entendu, d'autres moyens de retenue du pied de l'aube pourraient être envisagés.

Au niveau de son extrémité radiale intérieure (c'est-à-dire au niveau de son extrémité la plus proche de l'axe longitudinal du turboréacteur), le plot 4 comprend des cannelures externes 16 de transmission d'un couple de torsion à un excentrique 18 (connue également sous le terme de bague de transmission de calage) muni également de cannelures 20 portées sur sa surface interne et destinées à coopérer avec les cannelures externes 16 du plot 4. Bien entendu, d'autres moyens d'accouplement pour la transmission du couple de torsion peuvent être envisagés.

Cette bague de transmission de calage 18 est destinée à transmettre le couple de torsion au pivot de l'aube pour changer son pas de calage. Elle est verrouillée sur le plot par l'intermédiaire d'une vis 22 centrée sur l'axe radial Z-Z et d'un écrou 24 serré sur ladite vis.

Le pivot comprend encore des paliers à roulement pour la reprise des efforts centrifuges (c'est-à-dire selon l'axe radial Z-Z) et des efforts transversaux (c'est-à-dire selon un plan perpendiculaire à l'axe radial Z-Z) vus par l'aube et son pivot.

Plus précisément, le pivot comprend un palier à roulement à billes 26 qui est destiné à reprendre les efforts centrifuges. Ce palier à roulement à billes 26 est muni d'une bague interne 28 qui est montée en appui transversal contre un épaulement externe du plot 4.

De préférence, la bague interne 28 est formée de deux parties distinctes 28a, 28b. Cette caractéristique permet de faciliter le montage du pivot comme il sera détaillé ultérieurement.

Ce palier à roulement à billes 26 comprend également une bague externe 30 qui est destiné à être montée en appui transversal à l'intérieur de l'orifice 6 du moyeu 8 de la soufflante et peut aussi être formée en deux parties distinctes 30a, 30b pour aussi faciliter le montage du pivot, les bagues interne 28 et externe 30 définissant des pistes de roulement pour une pluralité de billes 32 maintenus dans une cage centrale 32A.

Pour reprendre les efforts transversaux, le pivot comprend également un palier à roulement à aiguilles ou à rouleaux 34 qui est décalé radialement vers l'intérieur par rapport au palier à roulement à billes 26. On notera toutefois que selon le poids et la puissance de la pale, et la durée de vie souhaitée, des bagues auto-lubrifiées peuvent tout aussi bien convenir pour la reprise de ces efforts transversaux.

Ce palier à roulement à aiguilles ou à rouleaux 34 comprend une bague interne 36 et une bague externe lisse 38, les bagues interne 36 et externe lisse 38 définissant des pistes de roulement pour une pluralité d'aiguilles ou de rouleaux 40 éventuellement maintenus dans une cage centrale.

De façon plus précise, la bague interne 36 est montée sur un manchon anti-rupture 42, par exemple fretté sur le plot 4 et qui s'étend selon l'axe Z-Z successivement en une partie cylindrique 42A puis une partie conique évasée vers l'extérieur 42B, la jonction entre ces deux parties formant un appui transversal 42C pour la bague interne 36 qui est en outre mis sous pression par un anneau de calage 44 avantageusement fusible en centrifuge et dont on peut calibrer les dimensions pour que cet anneau flambe à partir d'un certain effort centrifuge. L'anneau de calage fusible peut servir d'indicateur d'état des pistes de roulement en permettant la détection d'efforts radiaux susceptibles d'endommager ces pistes de roulement. En effet, si un effort radial conséquent survient, l'anneau fusible est endommagé, ce qui est détecté par au moins un des capteurs décrit plus avant.

La bague externe lisse 38 est quant à elle montée en appui transversal à l'intérieur de l'orifice 6 du moyeu 8 de la soufflante via une bride souple ou un anneau support ajouré 46 fixé à sa circonférence par des vis au moyeu 8, comme illustré par les trous de vis 47.

Cet anneau support ajouré 46 (une forme en créneaux serait aussi envisageable) présente l'avantage de conférer à la bague externe lisse 38 une souplesse lui permettant d'empêcher la propagation de vibrations dans le reste du système de calage de pas lors d'évènements en vol tels que des impacts sur les aubes de soufflante avec des éléments extérieurs. Un anneau anti-rotation ou un anneau élastique de serrage 48 de type « circlips » par exemple, permet un verrouillage en position de cet anneau en retenant la bague externe du palier.

Le manchon anti-rupture comporte dans sa partie conique une extrémité terminale 42D qui se prolonge transversalement au-delà de la bague externe lisse 38 du palier à roulement de reprise des efforts transversaux, de sorte à constituer un arrêt en cas de déplacement radial du plot, cette partie terminale venant alors en contact avec la bague externe lisse, elle-même en appui transversal sur le moyeu 8 de la soufflante.

Un premier écrou de serrage 50 destiné à être vissé sur un filetage interne 8A du moyeu 8 permet d'assurer un serrage contre celui-ci de la bague externe 30 du palier à roulement à billes 26 de reprise des efforts centrifuges.

Un second écrou de serrage 52 est vissé sur un filetage externe 4A du plot 4 pour assurer un serrage de la bague interne 28 du palier à roulement à billes 26 de reprise des efforts centrifuges sur le plot, au travers de la chaine d'appuis successifs formée du manchon anti-rupture 42, de la bague interne 36 du roulement à aiguilles ou à rouleaux 34 et de l'anneau de calage 44.

Un capteur de position 54 est en outre placé en vis-à-vis de l'extrémité terminale 42D du manchon anti-rupture 42 afin de détecter la rupture du palier à roulements à billes 26. En effet, l'altération ou la perte de signal due à un déplacement radial du manchon anti-rupture sera détectée par ce capteur de position.

On notera toutefois que cette défaillance peut aussi être détectée par les capteurs de balourd du moteur car la défaillance d'un roulement excentre le pied de pale, engendrant un balourd sur le rotor (dans le cas toutefois où la défaillance ne concerne qu'un des pivots).

De même, en cas de flambage de l'anneau de calage fusible, le manchon anti-rupture ne sera également plus en vis-à-vis du capteur de position. Cela permet par exemple de détecter une survitesse. En effet, les soufflantes à calage de pas peuvent passer par des calages où la soufflante ne consomme plus de puissance et accélère fortement entrainant des survitesses.

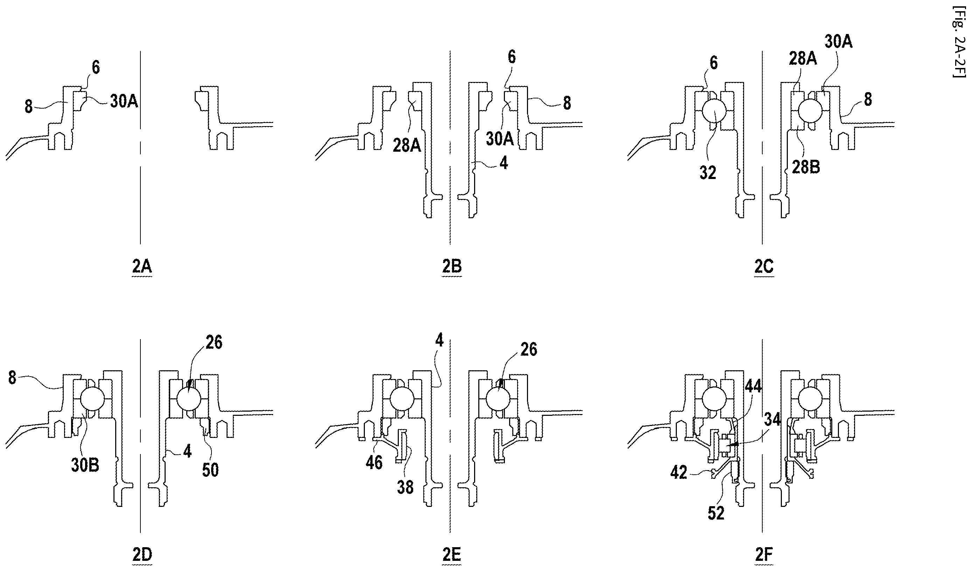

En liaison avec les figures 2A à 2F, on décrira maintenant un exemple de montage du pivot selon l'invention.

Au cours d'une première étape illustrée par la figure 2A, la demi-bague externe 30a du palier à roulement à billes 26 est montée en appui transversal à l'intérieur de l'orifice 6 du moyeu 8 de la soufflante (elle est par exemple frettée).

Puis, comme représenté sur la figure 2B, le plot 4 est alors descendu radialement dans l'orifice 6 du moyeu 8, le plot étant préalablement prémuni (par exemple par frettage) de la demi-bague interne 28A du palier à roulement à billes 26.

Dans une troisième étape illustrée à la figure 2C, l'autre demi-bague interne 28B du palier à roulement à billes 26 est ensuite montée pour former la bague interne 28, puis les billes 32 de ce palier à roulement sont montées avec leur cage 32A.

Dans l'étape de la figure 2D, la demi-bague externe 30B du palier à roulement à billes 26 est alors montée et maintenue par le serrage du premier écrou de serrage 50.

Dans l'étape suivante (figure 2E), la bague externe 38 du palier à roulement à aiguilles ou à rouleaux 34 et l'anneau support 46 sont montés à leur tour à l'intérieur de l'orifice 6 du moyeu 8 de la soufflante. L'anneau support 46 est fixé au moyeu 8 par les vis (orifices 47) et l'ensemble sera verrouillé en position à l'aide de l'anneau anti-rotation 48.

Puis dans l'étape 2F, la bague interne lisse 38 et les roulements du palier à roulement 34 sont engagés autour du plot 4 avec la partie fusible 44 au préalable montée sur le manchon anti-rupture 42 avant d'être verrouillées par serrage du second écrou de serrage 52.

Enfin, dans une dernière étape (correspondant à la figure 1), le pied 12 de l'aube peut être monté dans l'attache 10 en forme de bulbe ménagée à l'extrémité radiale extérieure du plot 4, étant entendu que l'on avait préalablement monté la bague de transmission de calage 18 à l'extrémité du plot 4 en faisant coopérer leurs cannelures respectives 16, 20 et verrouillée celle-ci par montage de la vis 22 et serrage de l'écrou 24.

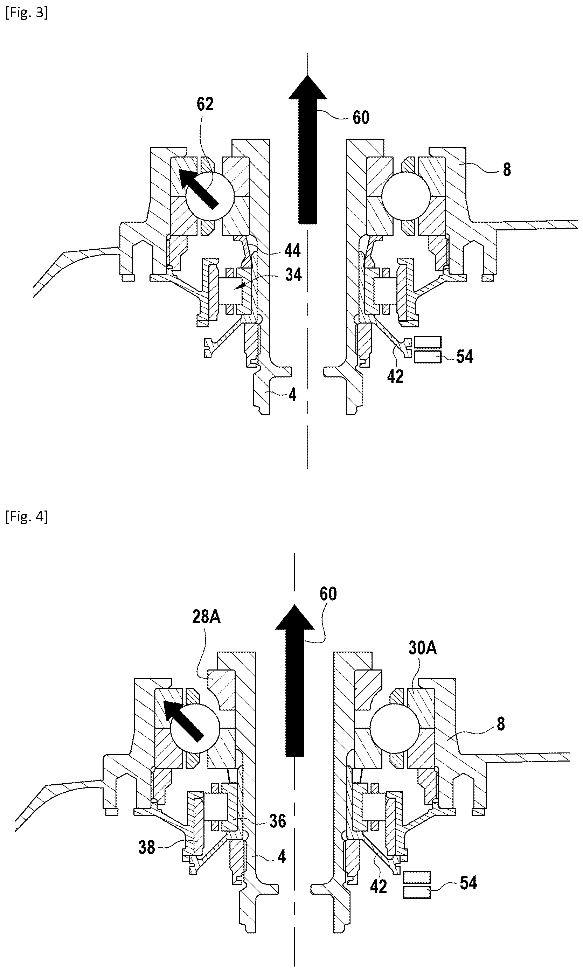

Les figures 3 et 4 illustrent la configuration du pivot selon l'invention respectivement en fonctionnement normal et en cas de défaillance.

Dans la position de fonctionnement normal, le capteur de position 54 est placé en vis-à-vis de l'extrémité terminale 42D de la partie conique du manchon anti-rupture. La référence 60 se rapporte à la charge radiale exercée sur le pivot et la référence 62 au transfert de charge vers le moyeu. Il est à noter que le second écrou 52 situé sur le pivot bloque alors l'ensemble du montage.

Dans la position de défaillance, en l'espèce de l'anneau fusible 44 (mais le cas serait identique en cas de rupture du roulement à billes 26), on note le déplacement radial de l'ensemble des éléments liés sur le pivot vers l'extérieur, notamment le glissement des rouleaux 40 sur la bague externe lisse 38. On notera que la bille 32 étant en butée sur la demi-bague restante, les charges radiales peuvent toutefois encore transiter vers le moyeu 8.

Le décalage du manchon anti-rupture par rapport au capteur de position permettra d'identifier que le pivot n'est plus en position normal de fonctionnement, ce manchon anti-rupture stoppant le déplacement ultime du pivot qui viendra se mettre en butée sur le support de roulement et ainsi éviter toute perte d'éléments.

On notera qu'il peut être envisagé de ne placer des anneaux fusibles que sur certaines aubes, inégalement réparties angulairement. Ainsi, seule une certaine portion des aubes verraient leurs pièces fusibles flamber, engendrant alors un balourd qui pourrait être détecté par les capteurs de balourd standards du moteur.

On notera également que le capteur de position peut aussi faire fonction de capteur de calage de pas, ce qui évite d'intégrer un capteur supplémentaire dans une zone déjà encombrée.

## Revendications

1. Pivot (2) d'aube à orientation réglable pour moyeu (8) de soufflante de turbomachine, comprenant :
- un plot (4) ayant à une première extrémité une attache (10) configurée pour retenir un pied d'aube (12) de soufflante et à une seconde extrémité des moyens d'accouplement (16) pour la transmission d'un couple de torsion ;
- un palier à roulement à billes de reprise des efforts centrifuges (26) ayant une bague interne (28) montée en appui transversal contre un épaulement externe du plot et une bague externe (30) destinée à être montée en appui transversal à l'intérieur du moyeu de soufflante ;
- un premier écrou de serrage (50) destiné à être vissé sur un filetage interne (8A) du moyeu de soufflante pour assurer un serrage de la bague externe du palier à roulement à billes de reprise des efforts centrifuges ;
- un palier à roulement de reprise des efforts transversaux (34) ayant une bague interne (36) et une bague externe (38) destinée à être montée en appui transversal à l'intérieur du moyeu de soufflante ;
- un anneau de calage (44) monté entre la bague interne (28) du palier à roulement à billes de reprise des efforts centrifuges et la bague interne (36) du palier à roulement de reprise des efforts transversaux pour assurer un appui transversal respectif à ces bagues internes; et
- un second écrou de serrage (52) vissé sur un filetage externe (4A) du plot pour assurer un serrage des bagues internes respectives du palier à roulement à billes de reprise des efforts centrifuges et du palier à roulement de reprise des efforts transversaux, **caractérisé en ce que** :
- le pivot d'aube comprend en outre un manchon anti-rupture (42) portant la bague interne (36) du palier à roulement de reprise des efforts transversaux et dont l'extrémité terminale se prolonge transversalement au-delà de la bague externe (38) du palier à roulement de reprise des efforts transversaux, de sorte à constituer un arrêt en cas de déplacement radial du plot (4) ;
- le palier à roulement de reprise des efforts transversaux (34) est un palier à aiguilles ou à rouleaux (40) dont la bague externe est lisse, les aiguilles ou les rouleaux glissant radialement sur la bague externe lisse en cas de déplacement radial du plot (4).

2. Pivot selon la revendication 1, dans lequel le manchon anti-rupture s'étend successivement en une partie cylindrique (42A) puis une partie conique évasée vers l'extérieur (42B) comportant l'extrémité terminale (42D), la jonction entre ces deux parties formant un appui transversal (42C) pour la bague interne (36) du palier à roulement de reprise des efforts transversaux.

3. Pivot selon la revendication 2, comprenant en outre un capteur de position (54) disposé en vis- vis d'une extrémité terminale (42D) du manchon anti-rupture et destiné à détecter tout déplacement radial du plot, dû par exemple à une rupture du palier à roulement à billes de reprise des efforts centrifuges (26).

4. Pivot selon l'une quelconque des revendications 1 à 3, dans lequel l'anneau de calage monté entre la bague interne (28) du palier à roulement à billes de reprise des efforts centrifuges (26) et la bague interne (36) du palier à roulement de reprise des efforts transversaux (34) est un anneau fusible en centrifuge (44).

5. Pivot selon l'une quelconque des revendications 1 à 4, dans lequel le manchon anti-rupture (42) est fretté sur le plot (4).

6. Pivot selon l'une quelconque des revendications 1 à 5, dans lequel le serrage des bagues internes respectives du palier à roulement à billes de reprise des efforts centrifuges et du palier à roulement de reprise des efforts transversaux par le second écrou de serrage (52) est effectué via le manchon anti-rupture (42) et l'anneau de calage (44).

7. Pivot selon l'une quelconque des revendications 1 à 6, dans lequel la bague interne (28) et la bague externe (30) du palier à roulement à billes de reprise des efforts centrifuges (26) sont réalisées en deux parties distinctes (28A, 28B ; 30A, 30B) afin de faciliter le montage du plot (4).

8. Soufflante de turbomachine, comprenant au moins une aube à orientation réglable dont le moyeu (8) est assemblé sur un pivot (2) selon l'une quelconque des revendications 1 à 7.

9. Turbomachine comprenant une soufflante selon la revendication 8.

10. Procédé de montage d'un pivot selon l'une quelconque des revendications 1 à 7, comprenant successivement : la descente du plot (4) dans un moyeu (8) de soufflante ; le montage du palier à roulements à billes de reprise des efforts centrifuges (26) à une première extrémité du plot ; le serrage du palier à roulement à billes de reprise des efforts centrifuges (26) par vissage du premier écrou de serrage (50) sur le filetage interne (8A) du moyeu ; le montage en appui transversal à l'intérieur du moyeu de l'anneau de retenu (46) portant la bague lisse externe (38) du palier à roulement de reprise des efforts transversaux (34) ; le montage du manchon anti-rupture (42) à une seconde extrémité du plot, le manchon anti-rupture portant les parties restantes (36, 40) du palier à roulements de reprise des efforts transversaux (34) ainsi qu'un anneau de calage fusible (44) ; et le serrage du palier à roulements de reprise des efforts transversaux par vissage du second écrou de serrage (52).

## Patentansprüche

1. Drehzapfen (2) für eine Schaufel mit einstellbarer Ausrichtung für die Nabe (8) eines Gebläses einer Turbomaschine, umfassend:
- einen Klotz (4), der an einem ersten Ende ein Befestigungsmittel (10), das dazu ausgestaltet ist, einen Fuß (12) einer Gebläseschaufel zu halten, und an einem zweiten Ende Kopplungsmittel (16) für die Übertragung eines Torsionsmoments aufweist,
- ein Kugel-Wälzlager zur Aufnahme von Zentrifugalkräften (26), das einen Innenring (28), der quer gegen eine äußere Schulter des Klotzes anliegend montiert ist, und einen Außenring (30) aufweist, der dazu bestimmt ist, quer gegen das Innere der Nabe des Gebläses anliegend montiert zu werden,
- eine erste Klemmmutter (50), die dazu bestimmt ist, auf ein Innengewinde (8A) der Nabe des Gebläses aufgeschraubt zu werden, um eine Klemmung des Außenrings des Kugel-Wälzlagers zur Aufnahme von Zentrifugalkräften sicherzustellen,
- ein Wälzlager zur Aufnahme von Querkräften (34), das einen Innenring (36) und einen Außenring (38) aufweist, der dazu bestimmt ist, quer gegen das Innere der Nabe des Gebläses anliegend montiert zu werden,
- einen Anstellring (44), der zwischen dem Innenring (28) des Kugel-Wälzlagers zur Aufnahme von Zentrifugalkräften und dem Innenring (36) des Wälzlagers zur Aufnahme von Querkräften montiert ist, um sicherzustellen, dass diese Innenringe jeweils quer gegeneinander anliegen, und
- eine zweite Klemmmutter (52), die auf ein Außengewinde (4A) des Klotzes aufgeschraubt ist, um eine Klemmung der jeweiligen Innenringe des Kugel-Wälzlagers zur Aufnahme von Zentrifugalkräften und des Wälzlagers zur Aufnahme von Querkräften sicherzustellen, **dadurch gekennzeichnet, dass**:
- der Schaufel-Drehzapfen ferner eine Bruchsicherungs-Hülse (42) aufweist, die den Innenring (36) des Wälzlagers zur Aufnahme von Querkräften trägt, und deren endständiges Ende sich quer über den Außenring (38) des Wälzlagers zur Aufnahme von Querkräften hinaus auf eine Weise fortsetzt, dass es einen Anschlag für den Fall einer radialen Verschiebung des Klotzes (4) bildet,
- das Wälzlager zur Aufnahme von Querkräften (34) ein Nadel- oder Rollenlager (40) ist, dessen Außenring glatt ist, wobei die Nadeln oder die Rollen im Fall einer radialen Verschiebung des Klotzes (4) radial auf dem glatten Außenring gleiten.

2. Drehzapfen nach Anspruch 1, wobei die Bruchsicherungs-Hülse sich der Reihe nach in einem zylindrischen Teil (42A) und anschließend in einem konischen, nach außen ausgestellten Teil (42B) erstreckt, der das endständige Ende (42D) beinhaltet, wobei die Vereinigung zwischen diesen zwei Teilen eine Querauflage (42C) für den Innenring (36) des Wälzlagers zur Aufnahme von Querkräften bildet.

3. Drehzapfen nach Anspruch 2, ferner umfassend einen Positionssensor (54), der gegenüber einem endständigen Ende (42D) der Bruchsicherungs-Hülse angeordnet und dazu bestimmt ist, jegliche radiale Verschiebung des Klotzes zu erfassen, die zum Beispiel durch einen Bruch des Kugel-Wälzlagers zur Aufnahme von Zentrifugalkräften (26) verursacht wird.

4. Drehzapfen nach einem der Ansprüche 1 bis 3, wobei der Anstellring, der zwischen dem Innenring (28) des Kugel-Wälzlagers zur Aufnahme von Zentrifugalkräften (26) und dem Innenring (36) des Wälzlagers zur Aufnahme von Querkräften (34) montiert ist, ein unter Zentrifugalbelastung schmelzbarer Ring (44) ist.

5. Drehzapfen nach einem der Ansprüche 1 bis 4, wobei die Bruchsicherungs-Hülse (42) auf den Klotz (4) aufgepresst ist.

6. Drehzapfen nach einem der Ansprüche 1 bis 5, wobei die Klemmung der jeweiligen Innenringe des Kugel-Wälzlagers zur Aufnahme von Zentrifugalkräften und des Wälzlagers zur Aufnahme von Querkräften durch die Klemmmutter (52) über die Bruchsicherungs-Hülse (42) und den Anstellring (44) bewirkt wird.

7. Drehzapfen nach einem der Ansprüche 1 bis 6, wobei der Innenring (28) und der Außenring (30) des Kugel-Wälzlagers zur Aufnahme von Zentrifugalkräften (26) in zwei getrennten Teilen (28A, 28B; 30A, 30B) verwirklicht sind, um die Montage des Klotzes (4) zu ermöglichen.

8. Gebläse einer Turbomaschine, umfassend zumindest eine Schaufel mit einstellbarer Ausrichtung, deren Nabe (8) an einem Drehzapfen (2) nach einem der Ansprüche 1 bis 7 montiert ist.

9. Turbomaschine umfassend ein Gebläse nach Anspruch 8.

10. Verfahren zur Montage eines Drehzapfens nach einem der Ansprüche 1 bis 7, der Reihe nach umfassend: das Einlassen des Klotzes (4) in eine Nabe (8) des Gebläses, die Montage des Kugel-Wälzlagers zur Aufnahme von Zentrifugalkräften (26) an einem ersten Ende des Klotzes, das Festklemmen des Kugel-Wälzlagers zur Aufnahme von Zentrifugalkräften (26) durch Aufschrauben der ersten Klemmmutter (50) auf das Innengewinde (8A) der Nabe, die Montage des Halterings (46), der den glatten Außenring (38) des Wälzlagers zur Aufnahme von Querkräften (34) trägt, auf radial gegen das Innere der Nabe anliegende Weise, die Montage der Bruchsicherungs-Hülse (42) an einem zweiten Ende des Klotzes, wobei die Bruchsicherungs-Hülse die verbleibenden Teile (36, 40) des Wälzlagers zur Aufnahme von Querkräften (34) sowie einen schmelzbaren Anstellring (44) trägt, und das Festklemmen des Wälzlagers zur Aufnahme von Querkräften durch Aufschrauben der zweiten Klemmmutter (52).

## Claims

1. A blade pivot (2) with adjustable orientation for a turbomachine fan hub (8), comprising:
- a stud (4) having, at a first end, a fastener (10) configured to retain a fan blade root (12) and, at a second end, coupling means (16) for the transmission of a twist torque;
- a ball bearing for taking centrifugal forces (26) having an inner ring (28) mounted transversely supported against an outer shoulder of the stud and an outer ring (30) intended to be mounted transversely supported inside the fan hub;
- a first clamping nut (50) intended to be screwed to an inner thread (8A) of the fan hub to ensure clamping of the outer ring of the ball bearing for taking centrifugal forces;
- a rolling-element bearing for taking transverse forces (34) having an inner ring (36) and a smooth outer ring (38) intended to be mounted transversely supported inside the fan hub;
- a locking ring (44) mounted between the inner ring (28) of the ball bearing for taking centrifugal forces and the inner ring (36) of the rolling-element bearing for taking transverse forces to ensure respective transverse support to these inner rings; and
- a second clamping nut (52) screwed to an outer thread (4A) of the stud to ensure clamping of the respective inner rings of the ball bearing for taking centrifugal forces and of the rolling-element bearing for taking transverse forces, **characterized in that**:
- the blade pivot also comprises an anti-rupture sleeve (42) carrying the inner ring (36) of the rolling-element bearing for taking transverse forces, the terminal end of which is extended transversely beyond the outer ring (38) of the rolling-element bearing for taking transverse forces, so as to constitute a stop in the event of radial movement of the stud (4);
- the rolling-element bearing for taking transverse forces (34) is a needle or roller bearing (40), the outer ring of which is smooth, the needles or rollers slide radially along the smooth outer ring when the stud (4) moves radially.

2. The pivot according to claim 1, wherein the anti-rupture sleeve extends successively into a cylindrical portion (42A), then an outwardly flared conical portion (42B) including the terminal end (42D), the junction between these two portions forming a transverse support (42C) for the inner ring (36) of the rolling-element bearing for taking transverse forces.

3. The pivot according to claim 2, further comprising a position sensor (54) arranged facing a terminal end (42D) of the anti-rupture sleeve and intended to detect any radial movement of the stud, due for example to a rupture of the ball bearing for taking centrifugal forces (26).

4. The pivot according to any one of claims 1 to 3, wherein the locking ring mounted between the inner ring (28) of the ball bearing for taking centrifugal forces (26) and the inner ring (36) of the rolling-element bearing for taking transverse forces (34) is a centrifugally fusible ring (44).

5. The pivot according to any one of claims 1 to 4, wherein the anti-rupture sleeve (42) is shrunk onto the stud (4).

6. The pivot according to any one of claims 1 to 5, wherein the clamping of the respective inner rings of the ball bearing for taking centrifugal forces and of the rolling-element bearing for taking transverse forces by the second clamping nut (52) is carried out via the anti-rupture sleeve (42) and the locking ring (44).

7. The pivot according to any one of claims 1 to 6, wherein the inner ring (28) and the outer ring (30) of the ball bearing for taking centrifugal forces (26) are produced in two distinct portions (28A, 28B; 30A, 30B) in order to facilitate the mounting of the stud (4).

8. A turbomachine fan, comprising at least one blade with adjustable orientation, the hub (8) of which is assembled on a pivot (2) according to any one of claims 1 to 7.

9. A turbomachine comprising a fan according to claim 8.

10. A method for mounting a pivot according to any one of claims 1 to 7, comprising successively: lowering the stud (4) into a fan hub (8); mounting the ball bearing for taking centrifugal forces (26) to a first end of the stud; clamping the ball bearing for taking centrifugal forces (26) by screwing the first clamping nut (50) on the inner thread (8A) of the hub; mounting the retention ring (46) carrying the smooth outer ring (38) of the rolling-element bearing for taking transverse forces (34) transversely supported inside the hub; mounting the anti-rupture sleeve (42) to a second end of the stud, the anti-rupture sleeve carrying the remaining portions (36, 40) of the rolling-element bearing for taking transverse forces (34) as well as a fusible locking ring (44); and clamping the rolling-element bearing for taking transverse forces by screwing the second clamping nut (52).
